# EUROPEAN PATENT APPLICATION

(11) **EP 2 453 162 A1**
(43) Date of publication of application: **16.05.2012**
(21) Application number: 10796936.2
(22) Date of filing: 19.02.2010
(51) Int. Cl.: F21S 2/00, F21V 3/04, F21V 5/00, F21V 19/00, G02F 1/13357, H04N 5/66, F21Y 101/02

(54) **ILLUMINATION DEVICE, DISPLAY DEVICE, AND TELEVISION RECEIVER**

(30) Priority: 09.07.2009 JP 2009162454
(71) Applicant: Sharp Kabushiki Kaisha, Osaka-shi, Osaka 545-8522 (JP)
(72) Inventor: KUROMIZU, Yasumori, Osaka-shi, Osaka 545-8522 (JP)
(74) Representative: Müller-Boré & Partner Patentanwälte
(86) International application number: PCT/JP2010/052515
(87) International publication number: WO 2011/004625

(57) **Abstract**

A backlight unit (49) for a display device (69) provided with a liquid crystal display panel (59) comprises a chassis (41), a diffusion plate (43) supported by the chassis, and point-like light sources supported by mounting substrates (21) provided on the chassis. The point-like light sources comprise light emitting modules (MJ). The mounting substrates are laid in a rectangular region (41a) adapted for arranging the mounting substrates therein and set on the chassis. The gaps at the boundaries between the mounting substrates do not continue in either the direction along the long sides and/or the direction along the short sides of the rectangular region so as to enable the rectangular region to be seen from end to end.

## Description

### Technical Field

The present invention is related to an illumination device, a display device including the illumination device, and a television receiver incorporating the display device.

### Background Art

Display devices using a non-self-luminous display panel such as, for example, a liquid crystal display panel typically incorporates an illumination device for illuminating the display panel from behind. Various types of light sources such as cold cathode tubes and light emitting elements are used as light sources of this type of illumination device. Examples of the light emitting elements include a light emitting diode (hereinafter referred to as "LED"), an organic electroluminescence element, an inorganic electroluminescence element, etc., among which the LED is most commonly used today. An illumination device described in Patent Literature 1 also uses LEDs as light sources.

In the illumination device described in Patent Literature 1, as shown in FIG. 12, an LED 122 is mounted on a mounting substrate 121, and further, a lens 124 is attached to the mounting substrate 121 to cover the LED 122. The mounting substrate 121, the LED 122, and the lens 124 together form a light emitting module mj. A large number of light emitting modules mj are arranged in a matrix form to form a planar light source.

In the illumination device described in Patent Literature 1, a large number of point light sources are arranged. On the other hand, a large number of linear light sources such as cold cathode tubes are arranged in an illumination device described in Patent Literature 2. In cases where, as in these two examples, an illumination device formed by arranging a plurality of light sources is incorporated in a display device, if light from the light sources directly enters the illumination device, it results in uneven brightness of the display surface. To prevent such uneven brightness, a diffusion plate is disposed between the light sources and the display device for diffusing light. A diffusion plate, as described in Patent Literature 2, is typically built as part of the illumination device.

In some cases where a large area needs to be illuminated with a planar light source formed by arranging a large number of point light sources, it may be necessary to arrange a plurality of mounting substrates, each supporting a plurality of point light sources. An example of such a case is disclosed in Patent Literature 3.

### Citation List

### Patent Literature

Patent Literature 1: JP-A- 2008-41546
Patent Literature 2: JP-A-2005-19065
Patent Literature 3: JP-A-2006-301209

### Summary of Invention

### Technical Problem

Many of mounting substrates that support point light sources have a reflection sheet bonded to a surface thereof for higher light reflectance. If a reflection sheet of the size of a mounting substrate is bonded to the mounting substrate, a large difference in light reflectance arises between the mounting substrate and the other parts, and this may invite the following problem.

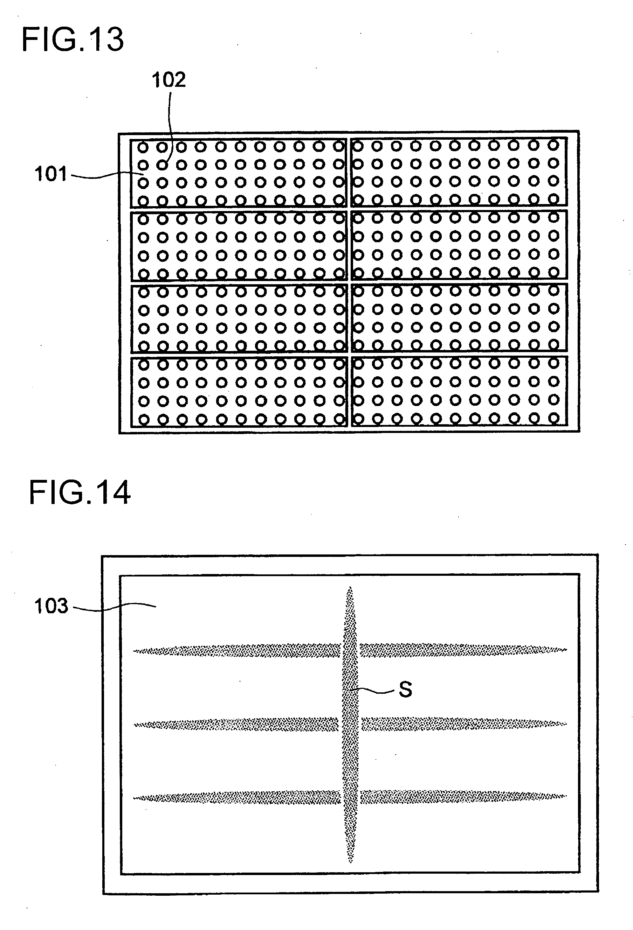

That is, boarders between mounting substrates, in other words, gaps formed at boundaries between the mounting substrates are, though depending on their widths, perceived as shadows when seen from outside the diffusion plate. This problem will be described with reference to FIGS. 13 and 14.

FIG. 13 shows mounting substrates 101, each of which supports a plurality of point light sources 102 such as LEDs. The mounting substrates 101 are rectangular elongated sideways, and the point light sources 102 are arranged into a matrix form of 4 rows and 11 columns on each of the mounting substrates 101. The mounting substrates 101 are arranged in 4 rows and 2 columns, to together form a rectangular planar light source that includes the point light sources 102 arranged in 16 rows and 22 columns in total.

FIG. 14 shows a diffusion plate 103 illuminated by the planar light source. The figure illustrates a state where gaps at the boundaries between the mounting substrates 101 appear as shadows S. The gaps at the boundaries between the mounting substrates 101 align straight, forming a pattern like a chess board, and thus the shadows S tend to be long and undesirably noticeable.

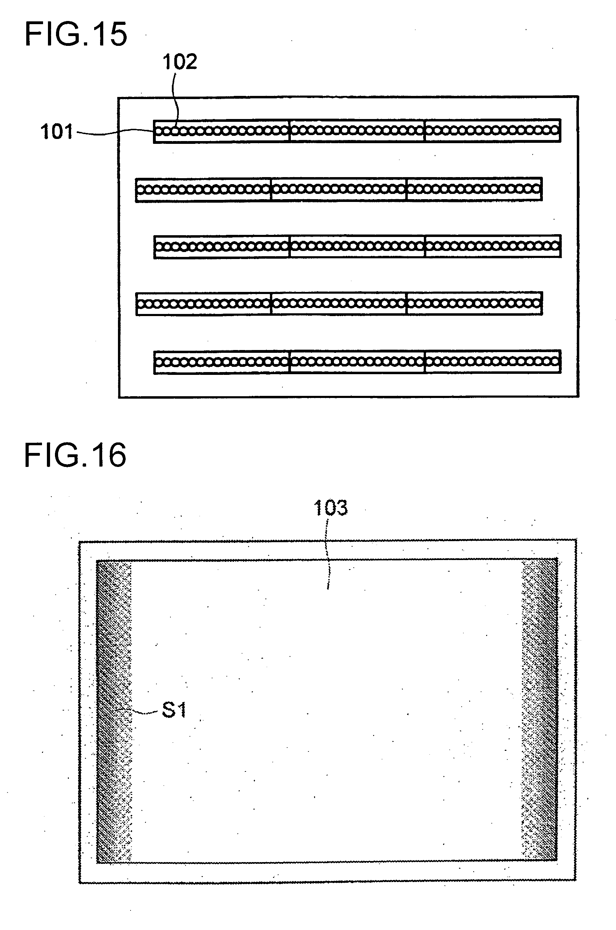

In an illumination device disclosed in Patent Literature 3, as shown in FIG. 15, a strip-shaped mounting substrate 101 has point light sources 102 arranged thereon in a row, and three mounting substrates 101 are serially arranged in a row, and a plurality of rows of mounting substrates 101 are arranged to form a planar light source. The rows each composed of three mounting substrates 101 1 are displaced from each other, as a result of which the gaps at the boundaries between the mounting substrates 101 form a zigzag or a staggered pattern, and thus, even if the shadows S as shown in FIG. 14 appear in the diffusion plate 103, they would not be so long as to be undesirably noticeable.

However, in the illumination device of Patent Literature 3, ends of the mounting substrates 101 are not aligned, and thus the point light sources 102 are less dense at edges of the planar light source. With this configuration, as shown in FIG. 16, shadows S1 resulting from insufficient light appear at edges of a diffusion plate 103. An attempt to hide the shadows S1 by covering them with a frame-shaped case in an electronic apparatus incorporating the illumination device would require the frame shape to be wide, preventing a narrower frame desirable in the design of the electronic apparatus.

The present invention has been made in view of the foregoing, and an object of the present invention is, in an illumination device including a diffusion plate, a chassis which supports the diffusion plate, and a light source which is formed of a plurality of mounting substrates each of which supports a plurality of point light sources, to prevent gaps at boundaries between the mounting substrates from appearing in an undesirably noticeable manner.

### Solution to Problem

According to a preferable embodiment of the present invention, an illumination device includes: a diffusion plate; a chassis which supports the diffusion plate; and a light source which is formed of a plurality of mounting substrates each of which supports a plurality of point light sources. Here, the mounting substrates are laid out in a rectangular mounting-substrate-layout region set on the chassis; and gaps at boundaries between the mounting substrates do not align straight in the rectangular mounting-substrate-layout region end to end at least in one of a short-side direction and a long-side direction thereof.

With this configuration, since the mounting substrates are laid out in the rectangular mounting-substrate-layout region , it is possible to gain the amount of light that a planar light source is required to cover all over the rectangular mounting-substrate-layout region. Further, since the gaps at the boundaries between the mounting substrates do not align straight in the rectangular mounting-substrate-layout region end to end at least in one of a short-side direction and a long-side direction thereof, no shadow appears to be so long as to be undesirably noticeable in the diffusion plate.

According to a preferred embodiment of the present invention, in the illumination device configured as described above, a plurality of kinds of rectangular mounting substrates are laid out in the rectangular mounting-substrate-layout region; and gaps at boundaries between the mounting substrates do not align straight in the rectangular mounting-substrate-layout region end to end either in the short-side direction or in the long-side direction thereof.

With this configuration, no shadow appears to be so long as to be undesirably noticeable in the diffusion plate either in the long-side direction or in the short-side direction of the diffusion plate.

According to a preferred embodiment of the present invention, in the illumination device configured as described above, a plurality of mounting-substrate rows, each of which is formed by serially arranging strip-shaped mounting substrates of different lengths in a longitudinal direction, are laid out in the rectangular mounting-substrate-layout region; and gaps at boundaries between the strip-shaped mounting substrates are displaced from each other between adjacent ones of the mounting-substrate rows such that the gaps at the boundaries between the mounting substrates do not align straight in the rectangular mounting-substrate-layout region end to end at least in one of the short-side direction and the long-side direction thereof.

This configuration facilitates the designing of the layout of the mounting substrates.

According to a preferred embodiment of the present invention, in the illumination device configured as described above, the point light sources are light emitting elements which are mounted on the mounting substrates, and each of the light emitting elements is covered with a lens.

With this configuration, it is possible to adjust the directivity of light emitted from the light emitting elements by using the lens.

According to a preferred embodiment of the present invention, in the illumination device configured as described above, the lens has a light diffusing function.

With this configuration, the light diffusing function of the lens helps achieve satisfactory diffusion of light. This widens the range of directions in which light is emitted from the light emitting elements, and this makes it possible to cover a wide area with comparatively a small number of light emitting elements.

According to a preferred embodiment of the present invention, in the illumination device configured as described above, the light diffusing function is given to the lens by applying surface-roughing treatment to a mountain-board-side surface of the lens.

This configuration helps achieve more satisfactory diffusion of light.

According to a preferred embodiment of the present invention, in the illumination device configured as described above, the light emitting elements are LEDs.

This configuration makes it possible to obtain a bright illumination device by using LEDs brightness of which has been significantly increased these days. It also makes it possible to achieve a light source with longer life and less power consumption.

According to a preferred embodiment of the present invention, in the illumination device configured as described above, the LEDs are formed to emit white light by applying a fluorescent substance having an emission peak in a yellow range to blue light emitting chips.

According to a preferred embodiment of the present invention, in the illumination device configured as described above, the LEDs are formed to emit white light by applying fluorescent substances, one of which having an emission peak in a green range, the other having an emission peak in a red range, to blue light emitting chips.

According to a preferred embodiment of the present invention, in the illumination device configured as described above, wherein the LEDs are formed to emit white light by combining red light emitting chips with blue light emitting chips to which a fluorescent substance having an emission peak in a green range is applied.

According to a preferred embodiment of the present invention, in the illumination device configured as described above, the LEDs are formed to emit white light by combining blue, green, and red light emitting chips.

In the white light emitted from a white-light-emitting LED, even color tone may be a hard target due to, for example, stronger blue. However, by assembling the LEDs to emit white light as in the present invention, it is possible to obtain illumination of leveled, substantially even color tone.

According to a preferred embodiment of the present invention, in the illumination device configured as described above, the LEDs are formed to emit white light by combining ultraviolet light emitting chips with a fluorescent substance.

According to a preferred embodiment of the present invention, in the illumination device configured as described above, the LEDs are formed to emit white light by applying fluorescent substances, one of which having an emission peak in a blue range, another having an emission peak in a red range, and the other having an emission peak in a green range, to ultraviolet light emitting chips

In cases where an ultraviolet light emitting chip is used as a light source, light emitted from the light source tends to have uneven color tone, but with the configuration of the present invention, it is possible to obtain illumination of leveled, substantially even color tone.

According to a preferred embodiment of the present invention, a display device is configured to include any one of the illumination devices configured as described above and a display panel which receives light from the illumination device.

With this configuration, it is possible to obtain a display device that suffers less from uneven brightness.

According to a preferred embodiment of the present invention, in the display device configured as described above, the display panel is a liquid crystal display panel.

With this configuration, it is possible to obtain a liquid crystal display device that suffers less from uneven brightness.

According to a preferred embodiment of the present invention, a television receiver includes the display device configured as described above.

With this configuration, it is possible to obtain a television receiver that suffers less from uneven brightness.

### Advantageous Effects of Invention

According to the present invention, it is possible to obtain a satisfactory amount of light as a planar light source all across the rectangular mounting-substrate-layout region, and to reduce occurrence of shadows that appear to be so long as to be undesirably noticeable in the diffusion plate, which would otherwise result in degraded quality of illumination.

### Brief Description of Drawings

[FIG. 1] An exploded perspective view of a display device including an illumination device according to a preferred embodiment of the present invention;
[FIG. 2] A sectional view showing part of an illumination device;
[FIG. 3] A plan view showing a mounting-substrate layout according to a first embodiment;
[FIG. 4] A plan view of a diffusion plate illuminated by mounting substrates laid out according to the first embodiment;
[FIG. 5] A plan view of a mounting-substrate layout according to a second embodiment;
[FIG. 6] A plan view of a mounting-substrate layout according to a third embodiment;
[FIG. 7] A plan view of a mounting-substrate layout according to a fourth embodiment;
[FIG. 8] A plan view of a mounting-substrate layout according to a fifth embodiment;
[FIG. 9] A plan view of a mounting-substrate layout according to a sixth embodiment;
[FIG. 10] A plan view of a mounting-substrate layout according to a seventh embodiment;
[FIG. 11] An exploded perspective view of a television receiver;
[FIG. 12] An exploded perspective view of a conventional illumination device;
[FIG. 13] A plan view showing an example of mounting-substrate layout;
[FIG. 14] A plan view of a diffusion plate illuminated by the mounting substrates laid out in a manner shown in FIG. 13;
[FIG. 15] A plan view showing another example of mounting-substrate layout;
[FIG. 16] A plan view of a diffusion plate illuminated by mounting substrates laid out in a manner shown in FIG. 15;
[FIG. 17] A graph showing how illuminance differs in different directions of irradiation from an LED; and
[FIG. 18] A conceptual diagram showing a collective brightness of a plurality of LEDs.

### Description of Embodiments

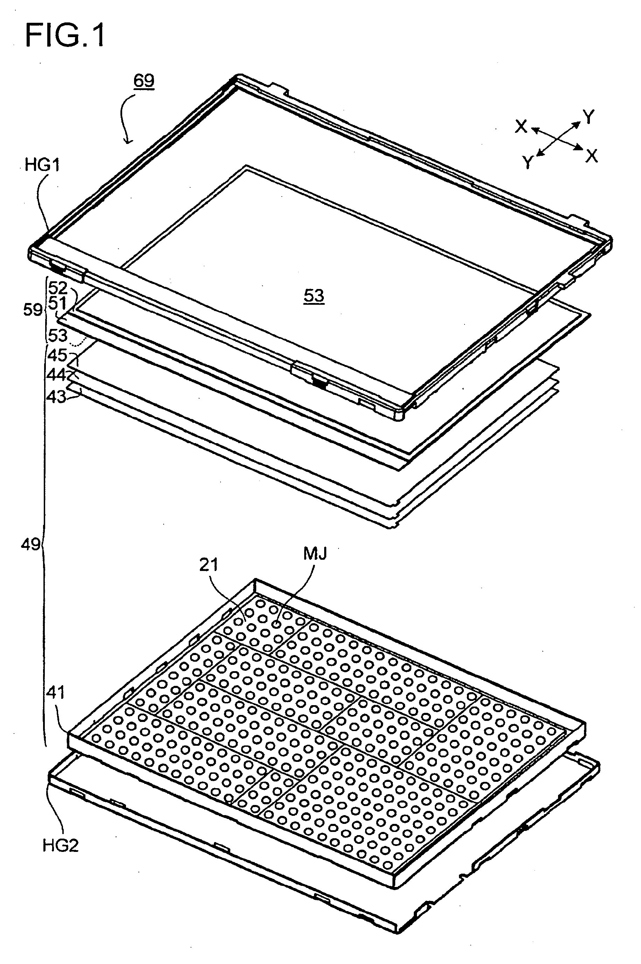

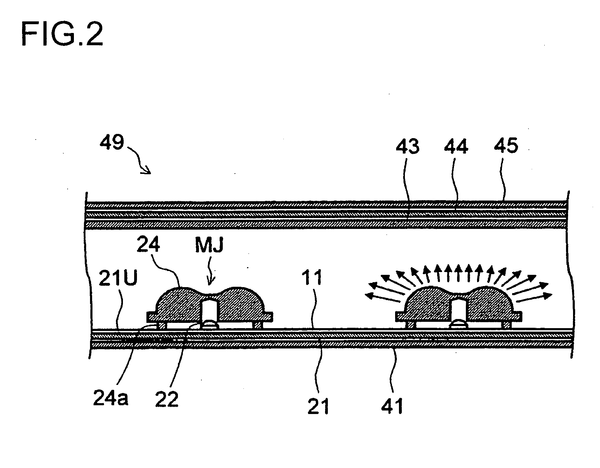

A description will be given, based on FIGS. 1 to 4, of the configuration of an embodiment of a display device incorporating an illumination device according to a preferred embodiment of the present invention. In FIG. 1, a display device 69 is illustrated as being horizontally placed with a display surface thereof facing upward.

The display device 69 incorporates a liquid crystal display panel 59 as a display panel. The liquid crystal display panel 59 and a backlight unit 49 which illuminates the liquid crystal display panel 59 from behind are accommodated in a housing. The housing is made by combining a front housing member HG1 and a rear housing member HG2.

The liquid crystal display panel 59 is made by bonding together an active matrix substrate 51, which includes switching elements such as thin film transistors (TFTs), and a counter substrate 52, which faces the active matrix substrate 51, with an unillustrated sealing material in between, and then filling the space between the active matrix substrate 51 and the counter substrate 52 with liquid crystal.

A polarization film 53 is fixed to a light receiving side of the active matrix substrate 51 and to a light emission side of the counter substrate 52. The liquid crystal display panel 59 forms an image by making use of variation in light transmittance resulting from different tilts of liquid crystal molecules.

The backlight unit 49, which embodies the illumination device of the present invention, has the following configuration. That is, the backlight unit 49 includes light emitting modules MJ, a chassis 41, a diffusion plate 43, a prism sheet 44, and a microlens sheet 45.

The chassis 41 has a tray-like shape where walls rise from edges of a rectangular main flat surface.

The light emitting modules MJ each include a mounting substrate 21, a point light source disposed on the mounting substrate 21, a lens 24 which covers the point light source, and a reflection sheet 11 which is bonded to a surface of the mounting substrate 21. The size of the reflection sheet 11 as a whole is the same as the size of the mounting substrate 21. The point light source is a light emitting element mounted on the mounting substrate 21. The light emitting element of this embodiment is an LED 22.

As the reflection sheet 11, there may be adopted a resin foam sheet containing a large number of fine air bubbles and exploiting the interface reflection in the air bubbles to the full to reflect light. This type of reflection sheet has a high optical reflectance; polyethylene-terephthalate (PET) foam sheets having a reflectance of 98% or more are available, and thus, it is desirable to adopt such a resin foam sheet.

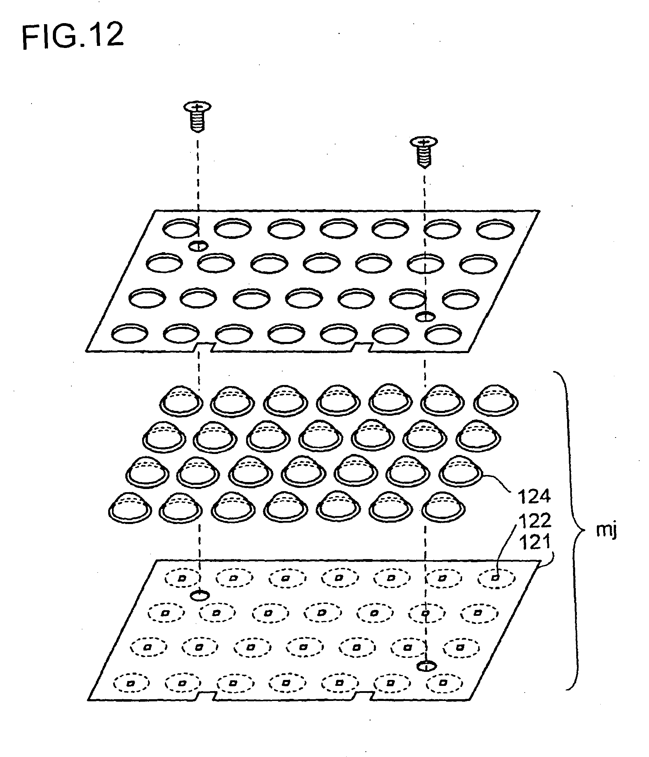

The lens 24 is provided with a light diffusing function. A description will be given of the significance of the light diffusing function that the lens 24 is provided with. Take, for example, the illumination device disclosed in Patent Literature 1. Although the illumination device shown in FIG. 12 is combined with lenses 124, since light from each of the LEDs 122 is emitted in a small range of directions, a large number of light emitting modules mj need to be arranged densely in order to avoid uneven brightness. This increases the cost for components and for mounting the components, making the illumination device expensive as a whole.

Recently, the brightness of LEDs has been significantly increased, so that it is now possible to obtain a sufficient amount of light to cover the entire screen with a comparatively small number of LEDs. However, if a small number of high-brightness LEDs are sparsely arranged, it is impossible to avoid uneven brightness, and thus, it is preferable to use a lens that is highly capable of diffusing light in combination with each LED. The lens provided with the light diffusing function will herein be referred to as "diffusion lens".

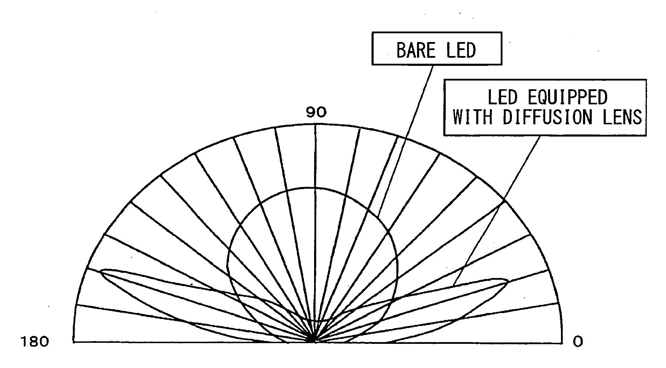

FIG. 17 is a graph showing how illuminance (unit Lux) differs in different irradiation directions in a case of a bare LED and in a case of an LED combined with a diffusion lens. In the case of the bare LED, the illuminance is highest at an angle of 90°, which is the angle of the optical axis, and sharply decreases farther away from there. In contrast, in the case of the LED combined with a diffusion lens, illuminance of a certain level or higher can be obtained in a wider area, and the peak of illuminance can be set at an angle that is different from the angle of the optical axis. Needless to say, the pattern of illuminance shown in the figure can be changed as desired by accordingly designing the diffusion lens.

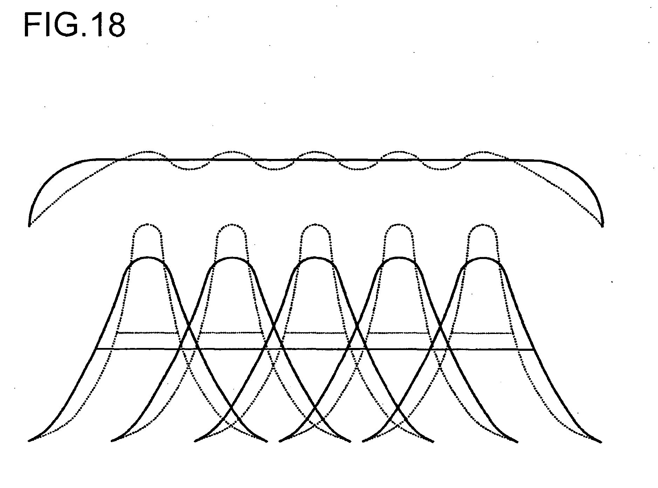

FIG. 18 conceptually shows a collective brightness of a plurality of LEDs. In the figure, the solid-line waveforms indicate the brightness of LEDs each combined with a diffusion lens, while the broken-line waveforms indicate the brightness of bare LEDs. The horizontal lines among the waveforms indicate widths (full width at half maximum) of the waveforms at brightness of levels half the peak levels. In the case of LEDs each combined with a diffusion lens, each waveform can have a large width, and thus it is easy to generate integrated collective brightness as flat brightness as shown in the upper part of the figure. In contrast, in the case of bare LEDs, the waveforms each have a high peak but have a narrow width, and thus it is impossible to avoid generation of waves in the brightness made by gathering the waveforms. Unevenly bright images are not desirable, so it is almost indispensably necessary to adopt the LED combined with a diffusion lens.

In view of the above, the light emitting module MJ is provided with a diffusion lens 24.

Surface-roughing treatment such as surface texturing (grain finishing) may be applied to a surface of the diffusion lens 24 that faces the mounting substrate 21, to thereby give the surface a light diffusing function. This allows still more effective diffusion of light.

The mounting substrate 21 is rectangular, and on its upper surface which is formed as a mounting surface 21U, a plurality of electrodes (not shown) are formed to be arranged in a matrix form, and LEDs 22 are mounted on the electrodes. The mounting substrate 21 functions as a common mounting substrate for the LEDs 22. A plurality of pairs of an LED 22 and a diffusion lens 24 are arranged in a matrix form in the X arrow direction and the Y arrow direction shown in FIG. 1. The mounting substrate 21 is fixed to the chassis 41 by an appropriate method such as swaging, bonding, screwing, or riveting.

The diffusion lens 24 is circular in plan, and has a plurality of legs 24a on its lower surface. The tips of the legs 24a are bonded to the mounting surface 21U of the mounting substrate 21 with an adhesive, and thereby the diffusion lens 24 is attached to the mounting substrate 21. The reflection sheet 11 has formed therein through holes in which the legs 24a of the diffusion lens 24 are inserted. The presence of the legs 24a generates a gap between the mounting substrate 21 and the diffusion lens 24. An air flow passes through the gap, and the LED 22 is cooled by the air flow. Incidentally, on the condition that heat dissipation is ensured, it is possible to use an integrally molded light emitting module in which an LED is embedded in a diffusion lens.

Various types of LEDs can be used as the LED 22. For example, it is possible to use an LED that is formed to emit white light by applying, to a blue light emitting chip, a fluorescent substance having an emission peak in the yellow range. It is also possible to use an LED that is formed to emit white light by applying, to a blue light emitting chip, fluorescent substances, one of which having an emission peak in the green range and the other having an emission peak in the red range. It is also possible to use an LED that is formed to emit white light by combining a red light emitting chip with a blue light emitting chip to which a fluorescent substance having an emission peak in the green range is applied. It is also possible to use an LED which is formed to emit white light by combining blue, green, and red light emitting chips.

LEDs that are formed to emit white light tend to emit white light in which the blue component appears stronger than the other components, and this may cause uneven color tone. By using LEDs emitting white light in the above-described manners, it is possible to obtain illumination of leveled, substantially even color tone.

In addition to the LEDs of the types described above, it is possible to use an LED that is formed to emit white light by combining an ultraviolet light emitting chip with a fluorescent substance, specifically, by applying fluorescent substances, one of which having an emission peak in a blue range, another having an emission peak in a green range, and the other having an emission peak in a red range, to an ultraviolet light emitting chip.

Use of an ultraviolet light emitting chip as the light source tends to result in uneven color tone, but with the above configuration, it is possible to obtain illumination of leveled, substantially even color tone.

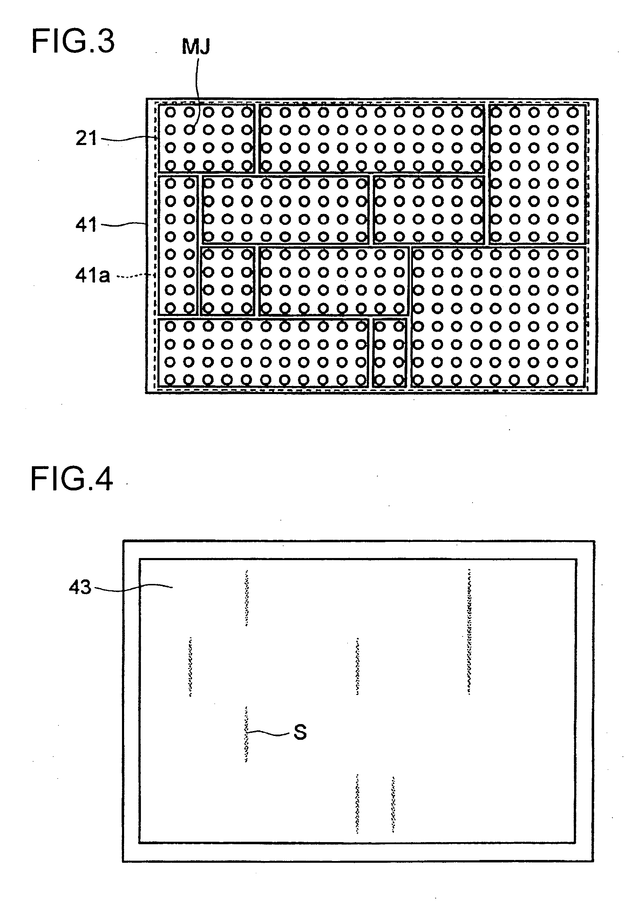

As the mounting substrates 21, a plurality of types of mounting substrates 21 are provided; the mounting substrates 21 are all rectangular shaped, but they have different rectangular shapes and different sizes. In a mounting-substrate layout according to a first embodiment shown in FIGS. 1 and 3, a total of 11 mounting substrates 21 are laid out all across a rectangular mounting-substrate-layout region 41a (see FIG. 3) which is set on the chassis 41. The light emitting modules MJ supported by the mounting substrates 21 together form a matrix uniformly spread out all over the rectangular mounting-substrate-layout region 41a.

When the LEDs 22 of the light emitting modules MJ are lit, light emitted from the LEDs 22 illuminates the diffusion plate 43 from behind. Fractional light from the LEDs 22 does not directly travel toward the diffusion plate 43; it is reflected by the reflection sheet 11 toward the diffusion plate 43. Light is diffused in the diffusion plate 43, and thus, as seen from outside, the diffusion plate 43 appears to be a plane having comparatively uniform brightness.

Gaps at the boundaries between the mounting substrates 21 do not align straight in the rectangular mounting-substrate-layout region 41a end to end either in the long-side direction or in the short-side direction thereof. As a result, as shown in FIG. 4, even if there should be any shadows S, they are not so long as to be undesirably noticeable either in the long-side direction or in the short-side direction of the diffusion plate 43. On the other hand, since the mounting substrates 21 are laid out all across the rectangular mounting-substrate-layout region 41 a, the amount of light that a planar light source is required to cover can be obtained all over the rectangular mounting-substrate-layout region 41a.

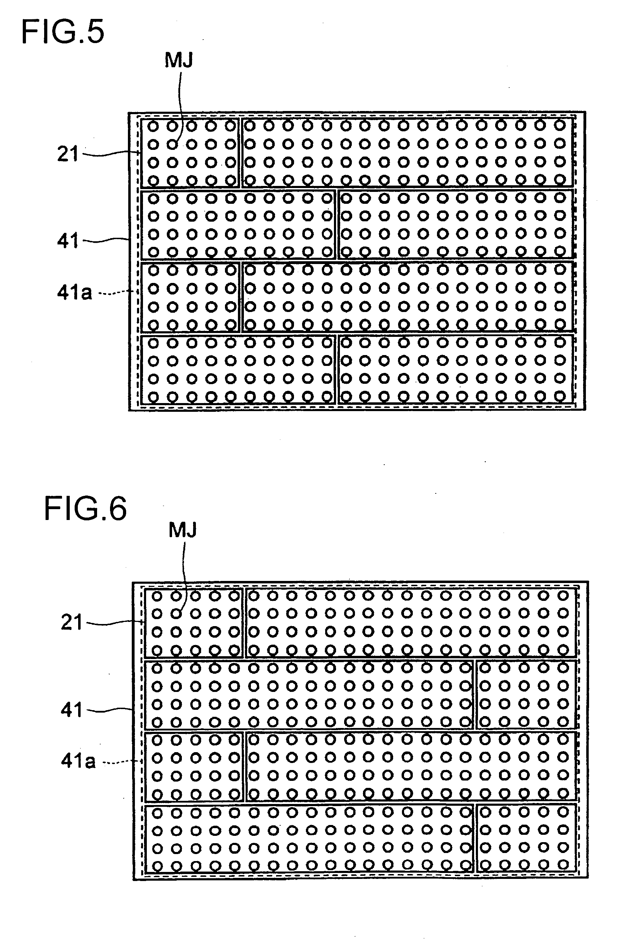

FIGS. 5 to 10 show mounting-substrate layouts according to other preferred embodiments.

In a mounting-substrate layout according to a second embodiment shown in FIG. 5, a total of eight mounting substrates 21 are laid out in the rectangular mounting-substrate-layout region 41a. On each of the mounting substrates 21, four light emitting modules MJ are arranged in the column direction, that is, in the Y arrow direction shown in FIG. 1. As to the row direction, that is, the X arrow direction shown in FIG. 1, the mounting substrate 21 on the left in the first row from the top in FIG. 5 has a width sufficient to hold five columns of light emitting modules MJ, while the mounting substrate 21 on the right has a width sufficient to hold 17 columns of light emitting modules MJ. This also applies to the mounting substrates 21 in the third row from the top. Of the two mounting substrates 21 in the second row from the top, the one on the left has a width sufficient to hold 10 columns of light emitting modules MJ, while the one on the right has a width sufficient to hold 12 columns of light emitting modules MJ. This also applies to the mounting substrates 21 in the fourth row from the top.

Gaps at the boundaries between the mounting substrates 21 do not align straight in the rectangular mounting-substrate-layout region 41a end to end in the short-side direction thereof, and thus, at least in this direction, a shadow that is so long as to be undesirably noticeable does not appear in the diffusion plate 43. On the other hand, since the mounting substrates 21 are laid out in the rectangular mounting-substrate-layout region 41 a, the amount of light that a planar light source is required to cover can be obtained all over the rectangular mounting-substrate-layout region 41 a.

In a mounting-substrate layout according to a third embodiment shown in FIG. 6, a total of eight mounting substrates 21 are laid out in a rectangular mounting-substrate-layout region 41a. On each of the mounting substrates 21, four light emitting modules MJ are arranged in the column direction, that is, in the Y arrow direction shown in FIG. 1. As to the row direction, that is, the X arrow direction shown in FIG. 1, the mounting substrate 21 on the left in the first row from the top in FIG. 6 has a width sufficient to hold five columns of light emitting modules MJ, while the mounting substrate 21 on the right has a width sufficient to hold 17 columns of light emitting modules MJ. This also applies to the mounting substrates 21 in the third row from the top. Of the two mounting substrates 21 in the second row from the top, the one on the left has a width sufficient to hold 17 columns of light emitting modules MJ, while the one on the right has a width sufficient to hold five columns of light emitting modules MJ. This also applies to the mounting substrates 21 in the fourth row from the top.

In the same manner as in the second embodiment, in the mounting-substrate layout according to the third embodiment, gaps at the boundaries between the mounting substrates 21 do not align straight in the rectangular mounting-substrate-layout region 41a end to end in the short-side direction thereof, and thus, at least in this direction, a shadow that is so long as to be undesirably noticeable does not appear in the diffusion plate 43. On the other hand, since the mounting substrates 21 are laid out in the rectangular mounting-substrate-layout region 41a, the amount of light that a planar light source is required to cover can be obtained all over the rectangular mounting-substrate-layout region 41a.

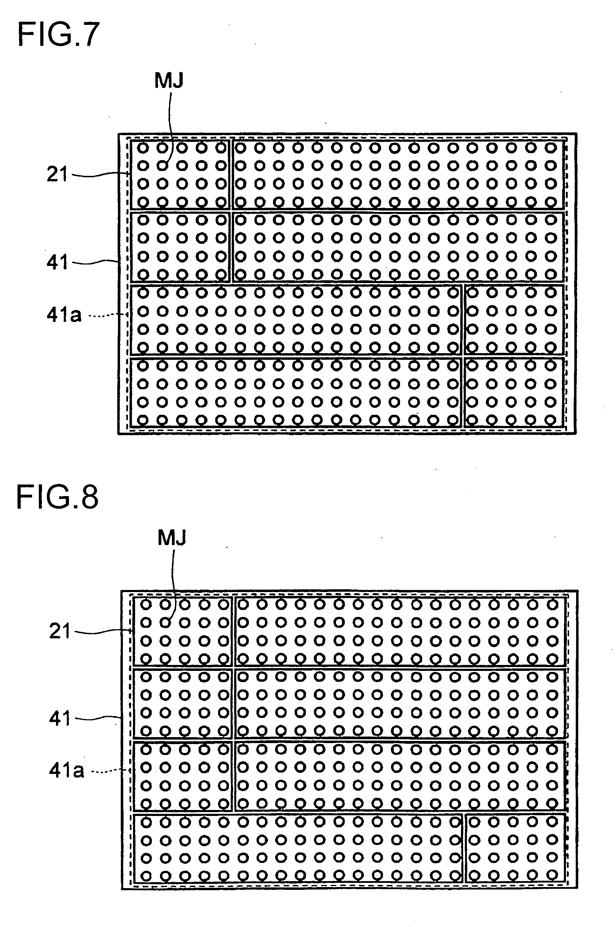

In a mounting-substrate layout according to a fourth embodiment shown in FIG. 7, a total of eight mounting substrates 21 are laid out in a rectangular mounting-substrate-layout region 41a. On each of the mounting substrates 21, four light emitting modules MJ are arranged in the column direction, that is, in the Y arrow direction shown in FIG. 1. As to the row direction, that is, the X arrow direction shown in FIG. 1, the mounting substrate 21 on the left in the first row from the top in FIG. 7 has a width sufficient to hold five columns of light emitting modules MJ, while the mounting substrate 21 on the right has a width sufficient to hold 17 columns of light emitting modules MJ. This also applies to the mounting substrates 21 in the second row from the top. Of the two mounting substrates 31 in the third row from the top, the one on the left has a width sufficient to hold 17 columns of light emitting modules MJ, while the one on the right has a width sufficient to hold five columns of light emitting modules MJ. This also applies to the mounting substrates 31 in the fourth row from the top.

In the same manner as in the second embodiment, in the mounting-substrate layout according to the fourth embodiment, gaps at the boundaries between the mounting substrates 21 do not align straight in the rectangular mounting-substrate-layout region 41a end to end in the short-side direction thereof, and thus, at least in this direction, a shadow that is so long as to be undesirably noticeable does not appear in the diffusion plate 43. On the other hand, since the mounting substrates 21 are laid out in the rectangular mounting-substrate-layout region 41 a, the amount of light that a planar light source is required to cover can be obtained all over the rectangular mounting-substrate-layout region 41a.

In a mounting-substrate layout according to a fifth embodiment shown in FIG. 8, a total of eight mounting substrates 21 are laid out in a rectangular mounting-substrate-layout region 41a. On each of the mounting substrates 21, four light emitting modules MJ are arranged in the column direction, that is, in the Y arrow direction shown in FIG. 1. As to the row direction, that is, the X arrow direction shown in FIG. 1, the mounting substrate 21 on the left in the first row from the top in FIG. 8 has a width sufficient to hold five columns of light emitting modules MJ, while the mounting substrate 21 on the right has a width sufficient to hold 17 columns of light emitting modules MJ. This also applies to the mounting substrates 21 in the second and third rows from the top. Of the two mounting substrates 21 in the fourth row from the top, the one on the left has a width sufficient to hold 17 columns of light emitting modules MJ, while the one on the right has a width sufficient to hold five columns of light emitting modules MJ.

In the same manner as in the second embodiment, in the mounting-substrate layout according to the fifth embodiment, gaps at the boundaries between the mounting substrates 21 do not align straight in the rectangular mounting-substrate-layout region 41 a end to end in the short-side direction thereof, and thus, at least in this direction, a shadow that is so long as to be undesirably noticeable does not appear in the diffusion plate 43. On the other hand, since the mounting substrates 21 are laid out across the rectangular mounting-substrate-layout region 41 a, the amount of light that a planar light source is required to cover can be obtained all over the rectangular mounting-substrate-layout region 41a.

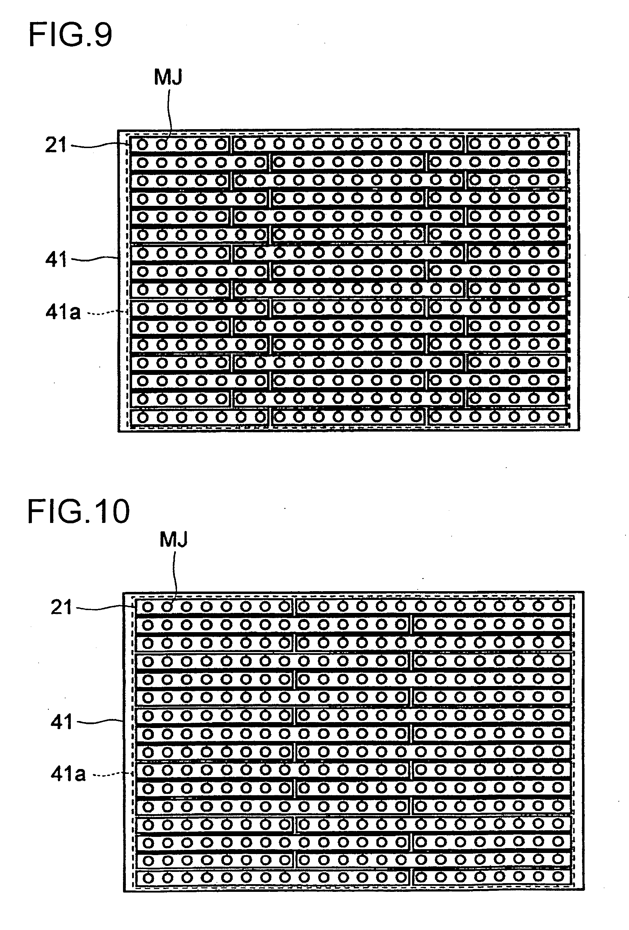

In a mounting-substrate layout according to a sixth embodiment shown in FIG. 9, a total of 48 mounting substrates 21 are laid out in a rectangular mounting-substrate-layout region 41a. The mounting substrates 21 are formed as laterally-long strips, and on each of them, a plurality of light emitting modules MJ are arranged in the row direction, that is, in the X arrow direction shown in FIG. 1. The mounting substrates 21 are not necessarily of the same length. As to the three mounting substrates 21 arranged in the first row from the top in FIG. 9, the one on the left has a width sufficient to hold five light emitting modules MJ, the one at the center has a width sufficient to hold 12 light emitting modules MJ, and the one on the right has a width sufficient to hold five light emitting modules MJ. As to the three mounting substrates 21 arranged in the second row from the top, the one on the left has a width sufficient to hold seven light emitting modules MJ, the one at the center has a width sufficient to hold eight light emitting modules MJ, and the one on the right has a width sufficient to hold seven light emitting modules MJ. The configurations of the first and second rows are alternately repeated in the rest of the rows.

Consequently, the mounting-substrate rows, each formed of three mounting substrates 21 arranged laterally side by side, are positioned such that boundaries between the mounting substrates 21 are displaced between any adjacent ones of the mounting-substrate rows, for example, the first and second mounting-substrate rows from the top. As a result, gaps at the boundaries between the mounting substrates 21 do not align straight in the rectangular mounting-substrate-layout region 41 a end to end in the short-side direction thereof, and thus, at least in this direction, a shadow that is so long as to be undesirably noticeable does not appear in the diffusion plate 43. On the other hand, since the mounting substrates 21 are laid out in the rectangular mounting-substrate-layout region 41 a, the amount of light that a planar light source is required to cover can be obtained all over the rectangular mounting-substrate-layout region 41a.

In a mounting-substrate layout according to a seventh embodiment shown in FIG. 10, a total of 32 mounting substrates 21 are laid out in a rectangular mounting-substrate-layout region 41a. Of the two mounting substrates 21 in the first row from the top, the one on the left has a width sufficient to hold eight light emitting modules MJ, while the one on the right has a width sufficient to hold 14 light emitting modules MJ. Of the two mounting substrates 21 in the second row from the top, the one on the left has a width sufficient to hold 14 light emitting modules MJ, while the one on the right has a width sufficient to hold eight light emitting modules MJ. The configurations of the first and second rows are alternately repeated in the rest of the rows.

Consequently, mounting-substrate rows, each including two mounting substrates 21 arranged laterally side by side, are positioned such that boundaries between the mounting substrates 21 are displaced between any adjacent ones of the mounting-substrate rows, for example, the first and second mounting-substrate rows from the top. As a result, gaps at the boundaries between the mounting substrates 21 do not align straight in the rectangular mounting-substrate-layout region 41 a end to end in the short-side direction thereof, and thus, at least in this direction, a shadow that is so long as to be undesirably noticeable does not appear in the diffusion plate 43. On the other hand, since the mounting substrates 21 are laid out in the rectangular mounting-substrate-layout region 41 a, the amount of light that a planar light source is required to cover can be obtained all over the rectangular mounting-substrate-layout region 41a.

The mounting-substrate layouts of the first to seventh embodiments are not meant to limit the scope of the present invention. The total number of mounting substrates 21, the number of light emitting modules MJ supported by each mounting substrate 21, the matrix pattern of the light emitting modules MJ, etc. may be set freely.

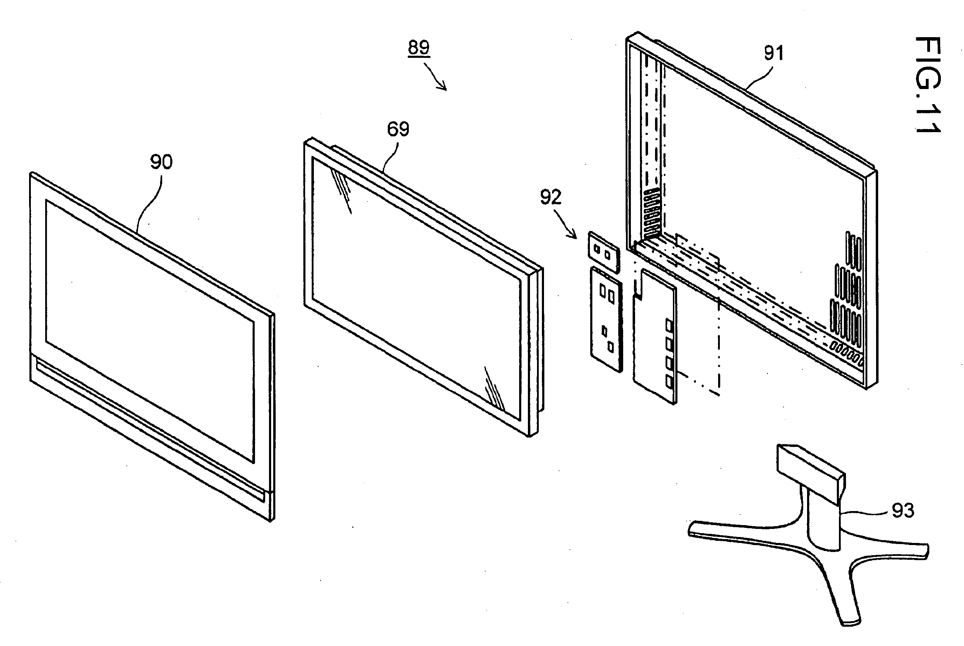

FIG. 11 shows an example of the configuration of a television receiver in which the display device 69 is incorporated. A television receiver 89 is arranged such that the display device 69 and a group of control boards 92 are housed in a cabinet composed of a front cabinet 90 and a rear cabinet 91 which are attached to each other, the cabinet being supported by a stand 93.

It should be understood that the embodiments specifically described above are not meant to limit the present invention, and that many variations and modifications can be made within the spirit of the present invention.

### Industrial Applicability

The present invention is widely applicable to illumination devices incorporating a diffusion plate which is irradiated with light from a light source. The present invention is also widely applicable to display devices incorporating the illumination device, and television receivers provided with the display device.

### List of Reference Symbols

- 49: backlight unit
- 41: chassis
- 43: diffusion plate
- MJ: light emitting module
- 21: mounting substrate
- 22: LED
- 24: diffusion lens
- 11: reflection sheet
- 59: liquid crystal display panel
- 69: display device
- 89: television receiver

## Claims

1. An illumination device, comprising:
a diffusion plate;
a chassis which supports the diffusion plate; and
a light source which is formed of a plurality of mounting substrates each of which supports a plurality of point light sources,
wherein
the mounting substrates are laid out in a rectangular mounting-substrate-layout region set on the chassis; and
gaps at boundaries between the mounting substrates do not align straight in the rectangular mounting-substrate-layout region end to end at least in one of a long-side direction and a short-side direction thereof.

2. The illumination device of claim 1,
wherein
a plurality of kinds of rectangular mounting substrates are laid out in the rectangular mounting-substrate-layout region; and
the gaps at boundaries between the mounting substrates do not align straight in the rectangular mounting-substrate-layout region end to end either in the long-side direction or in the short-side direction thereof.

3. The illumination device of claim 1,
wherein
a plurality of mounting-substrate rows, each of which is formed by serially arranging strip-shaped mounting substrates of different lengths in a longitudinal direction, are laid out in the rectangular mounting-substrate-layout region; and
gaps at boundaries between the strip-shaped mounting substrates are displaced from each other between adjacent ones of the mounting-substrate rows such that the gaps at the boundaries between the mounting substrates do not align straight in the rectangular mounting-substrate-layout region end to end at least in one of the long-side direction or the short-side direction thereof.

4. The illumination device of claim 1,
wherein
the point light sources are light emitting elements which are mounted on the mounting substrates, and
each of the light emitting elements is covered with a lens.

5. The illumination device of claim 4, wherein the lens has a light diffusing function.

6. The illumination device of claim 5,
wherein
the light diffusing function is given to the lens by applying surface-roughing treatment to a mountain-board-side surface of the lens.

7. The illumination device of claim 4, wherein the light emitting elements are LEDs.

8. The illumination device of claim 7, wherein the LEDs are formed to emit white light by applying a fluorescent substance having an emission peak in a yellow range to blue light emitting chips.

9. The illumination device of claim 7,
wherein
the LEDs are formed to emit white light by applying fluorescent substances, one of which having an emission peak in a green range and another having an emission peak in a red range, to blue light emitting chips.

10. The illumination device of claim 7, wherein the LEDs are formed to emit white light by combining red light emitting chips with blue light emitting chips to which a fluorescent substance having an emission peak in a green range is applied.

11. The illumination device of claim 7, wherein the LEDs are formed to emit white light by combining blue, green, and red light emitting chips.

12. The illumination device of claim 7, wherein the LEDs are formed by combining ultraviolet light emitting chips with a fluorescent substance.

13. The illumination device of claim 12, wherein the LEDs are formed to emit white light by applying fluorescent substances, one of which having an emission peak in a blue range, another having an emission peak in a green range, and another having an emission peak in a red range, to the ultraviolet light emitting chips.

14. A display device, comprising: the illumination device of any one of claims 1 to 13; and a display panel which receives light from the illumination device.

15. The illumination device of claim 14, wherein the display panel is a liquid crystal display panel.

16. A television receiver comprising the display device of claim 14.
